# EUROPEAN PATENT SPECIFICATION

(11) **EP 2 157 808 B1**
(45) Date of publication and mention of the grant of the patent: **01.06.2016**
(21) Application number: 07845856.9
(22) Date of filing: 10.12.2007
(51) Int. Cl.: H04W 88/08, H04W 40/24, H04W 24/02, H04B 7/26, H04W 84/04, H04W 88/04

(54) **ADAPTIVE MANAGEMENT METHOD FOR WIRELESS TRANSFER NETWORK CONTAINING BASE STATION AND WIRELESS RELAY STATIONS**
ADAPTIVES VERWALTUNGSVERFAHREN FÜR EIN DRAHTLOSES TRANSFERNETZ, DAS EINE BASISSTATION UND DRAHTLOSE RELAISSTATIONEN ENTHÄLT
PROCÉDÉ DE GESTION ADAPTATIVE POUR RÉSEAU DE TRANSFERT SANS FIL À STATION DE BASE ET STATIONS RELAIS SANS FIL

(30) Priority: 13.04.2007 CN 200710101408
(43) Date of publication of application: 24.02.2010
(73) Proprietor: ZTE Corporation, Shenzhen City Guangdong Province 518057 (CN)
(72) Inventor: CAI, Sean, San Diego, California 92130 (US); XU, Ling, Shenzhen City Guangdong Province 518057 (CN)
(74) Representative: Zerbi, Guido Maria
(86) International application number: PCT/CN2007/003499
(87) International publication number: WO 2008/124984

(56) References cited:
- EP-A1- 1 675 321
- WO-A1-2006/018383
- CN-A- 1 852 194
- JP-A- 2005 303 563
- JP-A- 2006 287 468
- JP-A- 2007 036 397
- US-B1- 6 590 928

## Description

### Technical Field

The present invention relates to a management method for a wireless transmission network, and more specifically, to a management method for a wireless transmission network comprising a base station and wireless relay stations.

### Background of the Invention

Nowadays, there are a variety of wireless communication systems, of which the commonalities are: the complication of stations' construction, the cable support needed by the base stations, and the relatively fixed coverage of the base stations. Due to the complexity of the wireless communication environment, such as buildings' obstruction in the dissemination path or obstacles between the receiving antenna and transmitting antenna of a base station and a user, a user may be in the blind area of a base station service. As such, although the user is in the area covered by the base station, he can not communicate with the base station normally, thus the user's communication quality is severely deteriorated; or even the user can not access to the system. For a user at the edge of a cell, the signal decays severely since the signal has traveled a relatively long path, thus the communication quality and service quality between the user and the base station is impacted, for example, in order to guarantee a user at the edge of a cell can receive the signal from the base station normally, a low order encoding and modulation method has to be applied, therefore the user's data rate is decreased; and if a high order encoding and modulation method is applied to guarantee the user's data rate, the transmission power of both the base station and the use need to be increased, which will interfere other users in the cell and users in the adjacent cells. In addition, with the development of the application, these wireless access systems can not well meet the wireless access requirement of random burst and covering some areas unreachable by cable.

Therefore, in order to expand the coverage of the base station service area and improve the service quality of users at the edge of a cell, multiple types of relay systems have been developed so far, that is, the communication between a base station and a user is implemented through a relay station.

The relay system that emerged earlier is an analog relay system. After a relay station receives a signal, the signal received is analogically amplified without digital processing and then sent to a user, a base station, or the next relay station. This relay method is simple, but its disadvantage is obvious: besides the effective signal, the in-band interference signal received by the relay station is also amplified and sent in the transmission path. Therefore, the reliability of the useful signal is decreased after passing the relay station.

With the development of technology, the digital relay system is becoming mature. The system can demodulate and decode the received signal to acquire the source signal, and after storing and processing the signal, the system encodes and modulates the signal again, and sends the signal to a user, a base station, or the next relay station. This relay method prevents the transmission of the noise in the analog signal, and improves the reliability of the transmission.

Generally, a wireless communication system provides a point-to-multipoint network topology structure for high-speed wireless data transmission. In order to solve the problem in the communication quality of the users at the edge of a cell or in the blind area of a base station service, the concept of wireless relay station is introduced into the wireless network. However, the fixity, nomadic property and mobility of the wireless relay station is a new challenge for the management of the whole wireless network, such as dynamic construction and adjustment of the wireless network.

But the introduction of this kind of wireless relay stations greatly complicates the management of the wireless network. The construction, maintenance and optimization of the conventional relay stations are manually implemented, and the workload is very heavy for a practical application. Whereas a digital relay station can perform base band processing by itself, has a certain capability of control and resource scheduling, and is able to select a base station or wireless relay station to access to. These properties provide a basis for the self-configuration and self-optimization of the wireless relay station.

In a cable IP network, a routing table can be used to help a routing gateway to select the optimal path for route optimization, and the routing gateway needs to dynamically maintain the routing table. But this method is not suitable to apply in a wireless transmission network, mainly for the following reasons:
Each node in a wireless transmission network may cause the update of the wireless links due to the changing of the wireless environment status. This is different from the fixed connection in a cable network.

The reliability of a wireless link in a wireless transmission network is different from that of a cable network.

Each wireless link in a wireless transmission network needs to occupy wireless resources, and the wireless link occupies the wireless resources once it is established.

Based on the above problems, a new solution is needed to solve how a wireless relay station performs self-configuration and self-optimization in a wireless network.

The document EP 1675321 A1 discloses a communication control method in which a controller apparatus is configured to control a topology in an ad hoc network formed by a plurality of mobile terminals, the method including: acquiring, at the controller apparatus, location information on the mobile terminals; acquiring, at the controller apparatus, link information at the mobile terminals; determining, at the controller apparatus, a way to change the topology, based on the acquired location information, the acquired link information, and topology information showing the topology managed by the controller apparatus; generating, at the controller apparatus, instruction information for changing the topology, based on the determined way to change the topology, for transmission to a certain mobile terminal; and outputting, at the certain mobile terminal, the instruction information transmitted from the controller apparatus.

The document JP 2006287468 A discloses: Each terminal can utilize a plurality of routes for communication with the center (a terminal X can utilize 2 routes, for example). Each terminal and the center can detect the communication state of the routes, and informs the center of the detected communication state as route information (electric field strength of a route, a noise level, the number of stages of a terminal to pass through, etc.), and a storage part manages the whole of them. The center determines the optimal route based on the route information, and sets the optimal route to each terminal. If the terminals employs a method of informing the center of the newest route information each time of sending the monitor data and review the optimal route, operation in the system can be optimized in response to the fluctuation in the state of radio and the change in the system configuration.

The document JP 2005303563 A discloses a scheme for rapidly grasping to which one a radio terminal can communicate.

The document JP 2007036397 A discloses a scheme for transmitting an important message reliably to a specified node in a system in the ad hoc network system in which a plurality of nodes compose a network autonomously.

The document US 6590928 B1 discloses a connectivity structure in which units can set up point-to-point connections independently, without being hindered by point-to-point connections between other units sharing the same area and the same spectrum.

### Summary of the Invention

The technical problem to be solved by the present invention is to provide an adaptive management method for a wireless transmission network comprising a base station and wireless relay stations, and with the method the management of the wireless transmission network, such as access, configuration and scheduling can be more rationally and efficiently carried out, and the service quality and resource utilization can be effectively improved.

In order to solve the above technical problem, the present invention provides a method according to claim 1. Further improvements and embodiments and provided in the dependent claims.

Also provided is an adaptive management method for a wireless transmission network comprising a base station and wireless relay stations, the method being applied in a wireless transmission network group comprising a base station and wireless relay stations subordinated to the base station, and the method comprising the following steps of:
(a) a management node in the wireless transmission network group constructing a wireless network topology information structure of the group;
(b) the management node updating the wireless network topology information of the group when a network topology relationship of the wireless transmission network group changes;
(c) the management node utilizing the wireless network topology information of the group and a corresponding strategy to manage wireless relay stations and mobile terminals subordinated to the management node.

Moreover, the above method may further comprise the following feature: said management node is the base station.

Moreover, the above method may further comprise: taking, in the wireless transmission network group, a wireless relay station with other wireless relay stations subordinated thereto as an agent node,
composing a wireless transmission sub-network by the wireless relay station and the other wireless relay stations subordinated thereto , and
the agent node constructing a wireless network topology information structure of the wireless transmission sub-network, taking charges of updating the wireless network topology information when a network topology relationship of the wireless transmission sub-network changes, and reporting the wireless network topology information to the management node of the wireless transmission network group, and whereby the management node updates the wireless network topology information of the wireless transmission network group.

Moreover, the above method may further comprise the following feature: said wireless network topology information structure comprises information of nodes at two ends of wireless links in the wireless network, and information of a connection relationship between any two nodes, and further comprises information of a number of hops if there is a connection.

Moreover, the above method may further comprise: during a handover of a wireless relay station, said management node judging the number of hops of a target wireless relay station to which the handover is requested according to the network topology relationship, and if the number of hops exceeds a preset threshold number of hops, the management node rejecting the request or selecting another target node for the wireless relay station.

Moreover, the above method may further comprise: the management node in said wireless transmission network group further detecting and recording wireless link status information of the wireless transmission network group, and when detecting a change in the wireless link status information, updating original wireless link status information, and utilizing the wireless network topology information of the group, the wireless link status information and a corresponding strategy to manage the wireless relay stations and/or mobile terminals subordinated to the management node.

Moreover, the above method may further comprise the following feature: said wireless link status information comprises one or any combination of the following parameters: channel carrier to interference/noise ratio, packet loss/error rate in a wireless link, processing and transmission delay in a wireless link, actual throughput of a wireless link and resource configured for a wireless link.

Moreover, the above method may further comprise the following feature: said wireless link status information is acquired based on a detection result of a service signal, for a wireless link directly connecting to the management node, the management node detects relative parameters of uplink status and requests the node at the other end to report relative parameters of downlink status; for status of links between other nodes, nodes of previous hop therein acquire the status with the same method and report the status to the management node.

Moreover, the above method may further comprise the following feature: said wireless link status information is acquired based on a measurement result of a detection signal, the management node designates one or more nodes in the topology to send one or a series of test signals, and meanwhile designates other nodes to cooperate for the test and return test results to the node sending the signal or directly to the management node, the node sending the signal or the management node acquires status information of relative wireless links based on the detection result, and if the node sending the signal is not the management node, the node needs to report updated wireless link status information to the management node; and the management node adjusts connection relationships of the wireless transmission network according to current wireless network topology information and new wireless link status information.

Moreover, the above method may further comprise: said management node choosing the base station and all the wireless relay stations accessed to by some relay stations to send one or a series of test signals, and designating nodes at the other ends in the topology relationship to cooperate for the test and return test results,
the management node analyzing and updating the wireless link status information in the wireless transmission network group based on the test results, and adjusting connection relationships of the wireless transmission network according to current wireless network topology information and new wireless link status information.

Moreover, the above method may further comprise: said management node further transmitting the wireless network topology information of the group to wireless relay stations of the group and/or mobile terminals within the coverage of the group;
the wireless relay stations and/or mobile terminals which have obtained the wireless network topology information utilizing the wireless network topology information and a corresponding strategy to optimize connections in the wireless transmission group.

Moreover, the above method may further comprise: said management node transmitting the wireless network topology information of the group to all wireless relay stations in the group, or wireless relay stations accessed to by other wireless relay stations, or wireless relay stations before N^{th} hop; and/or
a wireless relay station requesting the wireless network topology information from the management node of the group, and the management node providing corresponding wireless network topology information according to the content of an application.

Moreover, the above method may further comprise: said management node broadcasting the wireless network topology information of the group, and the information being transmitted to wireless relay stations and/or mobile terminals within the coverage of the wireless transmission network group.

Moreover, the above method may further comprise the following feature: when said management node transmits the wireless network topology information of the group to the wireless relays stations of the group, a configuration indication information unit is added in an existing downlink data indication message to indicate the position and size of the wireless network topology information and wireless link status information; or a configuration indication message is directly used to carry the wireless network topology information and the wireless link status information.

Moreover, the above method may further comprise: said management nodes of adjacent wireless transmission networks exchanging the wireless network topology information or the wireless network topology information together with wireless link status information of the respective wireless transmission network group, and during a handover of a wireless relay station, when the wireless relay station detects a node in an adjacent cell, the base station selecting a target node based on the topology information or the network topology information together with the wireless link status information of the transmission network group of the adjacent cell and a corresponding strategy.

Moreover, the above method may further comprise: said management node transmitting the wireless network topology information or the wireless network topology information together with wireless link status information of adjacent cells to all or part of the wireless relay stations of the group, and when these wireless relay stations or mobile terminals within the coverage detect a signal from the adjacent cells during a handover, selecting a target node based on the above information and a corresponding strategy.

Moreover, the above method may further comprise: said management node further transmitting wireless link status information of the group to the wireless relay stations of the group and/or mobile terminals within the coverage of the group;
the wireless relay stations and/or mobile terminals which have obtained the wireless link status information utilizing the wireless network topology information, the wireless link status information and a corresponding strategy to optimize connections in the wireless transmission group.

With the method of the present invention, in a wireless communication system, the advantages of the wireless relay station can be fully utilized to increase the coverage and throughput, moreover, through the construction and update of the topology relationship, the topology relationship and resource configuration of the wireless relay station and the base station can be intelligently adjusted, thus the service quality and resource utilization rate of the wireless transmission network can be effectively improved.

### Brief Description of the Drawings

FIG. 1 is a networking diagram of the wireless relay communication system in accordance with the present invention;
FIG. 2 ~ FIG. 5 are four illustrations of the adaptive management method for a wireless transmission network in accordance with the present invention.

### Preferred Embodiments of the Present Invention

The present invention will be described in detail with combination of the accompanying figures and embodiments.

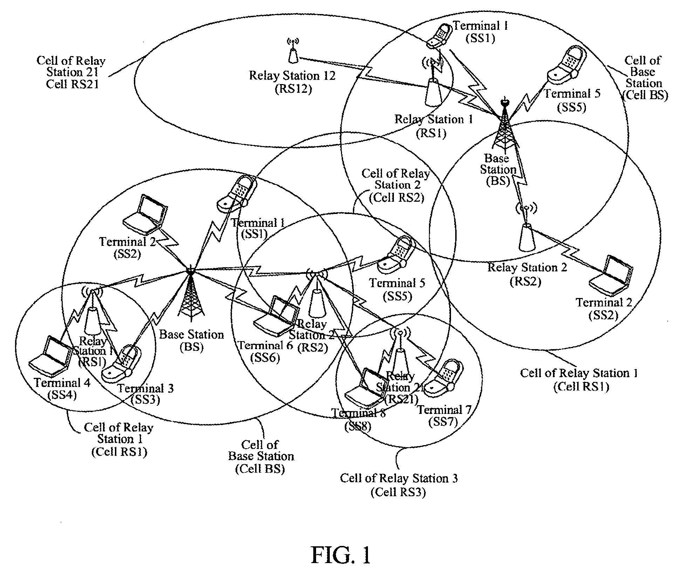

FIG. 1 shows the wireless communication system in which an intelligent construction of wireless relay of the present invention is applied, and the system comprises the following parts:
1) At least one base station (BS), sending synchronization signals and control information for the access and control of terminals and relay stations; the base station may directly communicate with the terminals; the base station may also communicate with the terminals through the relay stations.
2) At least one first-hop relay station (RS), directly accessing to a base station, and the base station and the wireless relay station sending synchronization signals and control information for the access and control of terminals and other relay stations.
3) At least one terminal (MS), communicating with a base station through relay stations;
4) A multi-hop relay station, which might be comprised in the system;
5) A terminal directly communicating with a base station, which might be comprised in the system.

As shown in FIG. 1, each base station may have one or more wireless relay stations, and each wireless relay station may further have wireless relay stations according to its demand, which is the mode of BS→RS→RS, for example, RS21 in FIG. 1 is a second hop wireless relay station. Some RS, such as RS1, is to expand the network coverage, and some RS, such as RS2, is to increase the throughput. Terminals can receive signals from multiple base stations and wireless relay stations simultaneously.

Thereby, the present invention refers to the group composed of a BS and the RSs subordinated to the BS (the RSs which directly or indirectly access to the BS) as a wireless transmission network group. One base station has only one wireless transmission network group and different base stations belong to different wireless transmission network groups.

### Adaptive management method for a wireless transmission network

### The first scheme

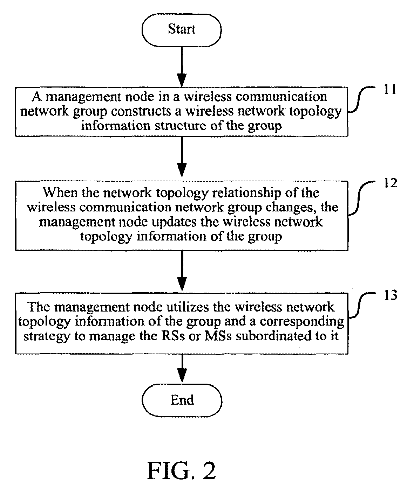

As shown in FIG. 2, this scheme comprises the following steps:
Step 11, a management node in a wireless transmission network group constructs a wireless network topology information structure of the group;
The wireless network topology information structure in this scheme comprises information of the nodes at two ends of wireless links in the wireless transmission network group, and the nodes at the ends can be represented by the base station ID (BSID) and relay station ID (RSID).

Above-mentioned information can be illustrated with a basic relationship matrix in which the connection relationship between any two nodes in the wireless transmission network group is described, including the information whether there is a connection or not, and the information of the number of hops if there is a connection.

Taking FIG. 1 for example, the relationship matrix of the wireless transmission network group to which the base station at the left side belongs is as follows:

| | **BS** | **RS1** | **RS2** | **RS21** |
|---|---|---|---|---|
| **BS** | **0** | **1** | **1** | **2** |
| **RS1** | **1** | **0** | **0** | **0** |
| **RS2** | **1** | **0** | **0** | **1** |
| **RS21** | **2** | **0** | **1** | **0** |

Similarly, the relationship matrix of the wireless transmission network group to which the base station at the right side of Fig. 1 belongs is as follows:

| | **BS** | **RS1** | **RS11** | **RS2** |
|---|---|---|---|---|
| **BS** | **0** | **1** | **2** | **1** |
| **RS1** | **1** | **0** | **1** | **0** |
| **RS11** | **2** | **1** | **0** | **0** |
| **RS2** | **1** | **0** | **0** | **0** |

Here, the first row and the first column are the numberings of all the nodes in the wireless transmission network group. And "0" indicates that there is no wireless link between these two nodes. While "1" indicates that there is a direct wireless link between these two nodes, and taking the "1" in the second row and third column for example, the "1" indicates that there is a direct wireless connection between RS1 and BS. "2" indicates that these two nodes are connected by two wireless links. Taking the "2" in the second row and the fifth column for example, the "2" indicates that RS21 and BS are connected by two wireless links, that is, RS21 connects with BS through a wireless relay station.

Therefore, a "1" in the relationship matrix corresponds to a wireless link, and the corresponding node in the first row and that in the first column are just the nodes at the two ends of the wireless link. Moreover, from the relationship matrix, the information of the number of hops between two nodes can be directly obtained.

There are several options for the configuration of the node with management function:
The first option is central control, in which the base station is generally the unique management node for constructing the wireless network topology information structure of the group and taking charge of the update and transmission of the information. But the possibility that some RS is designated as the management node in special cases is not ruled out.

The second option is distributed control, in which the base station is the management node for constructing the wireless network topology information structure of the group and taking charge of the update and transmission of the information. In addition, a wireless relay station can be an agent node to manage the wireless transmission sub-network subordinated to the wireless relay station, and the nodes in the wireless transmission sub-network comprise the agent node and one or more RSs accessing to the BS through the agent node, for example, RS2 at the left side can be an agent node to manage RS21.

The agent node constructs the wireless network topology information structure of the sub-network, takes charge of the update and transmission of the information within the sub-network, and also needs to send the wireless network topology information of the sub-network to the base station, and then the base station updates the whole wireless transmission network group.

In this case, the wireless network topology information structure of the sub-network constructed by agent node RS is similar to above-mentioned structure constructed by the base station, that is, it includes the information of nodes at two ends of wireless links in the wireless transmission sub-network, and may further include the information of the number of hops between the two nodes. This structure can be described through the same way of above-mentioned basic relationship matrix.

For example, RS1 is a node having relay station RS11 subordinated to it, thus it can manage such a relationship matrix by itself:

| | **RS1** | **RS11** |
|---|---|---|
| **RS1** | **0** | **1** |
| **RS11** | **1** | **0** |

The explanation of the information in this basic relationship matrix has been illustrated above, and will not be repeated.

Step 12, the management node updates the wireless network topology information of the group when the network topology relationship of the wireless transmission network group changes;

A new RS joining in, handover of an existing RS, connection termination of an existing RS (the handover and termination of a RS can be actively initiated by the management node or by RS), and so on, all may cause a change in the network topology relationship of the wireless transmission network group. These processes generally need the participation of the management node, thus the management node can acquire the change information of the network topology relationship according to corresponding signaling. If these changes occur in a wireless transmission sub-network administrated by an agent node, the agent node should report the updated topology relationship of the wireless transmission sub-network to the management node, thereby the management node can update the original wireless network topology information of the wireless transmission network group.

Step 13, the management node utilizes the wireless network topology information of the group and a corresponding strategy to manage the RSs or MSs subordinated to it.

One example is: when a RS or terminal requests a handover from one RS to another RS within the group, the base station judges the number of hops of the target RS to which the handover is requested based on the network topology relationship, and if the number of hops exceeds to a specified threshold, such as 2, the request may be denied or another target node may be selected for the RS or terminal, which can avoid the long delay after the access. However, the present invention is not limited to this specific case of management, and in practice, there may be a lot of applications in management such as configuration, scheduling and handover.

### The second scheme

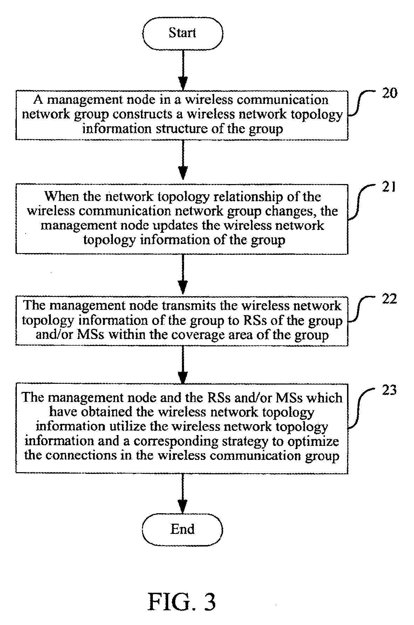

As shown in FIG. 3, the adaptive management method for a wireless transmission network in this scheme comprises the following steps:
Step 20, a management node in a wireless transmission network group constructs a wireless network topology information structure of the group;
Step 21, the management node updates the wireless network topology information of the group when the network topology relationship of the wireless transmission network group changes;
The above two steps are the same as those in the first scheme.

Step 22, the management node transmits the wireless network topology information of the group to RSs of the group and/or MSs in the coverage of the group;

In this scheme, the management node transmit the wireless network topology information of the group to all the RSs in the group, but in other cases, the information may just be transmitted to part of the RSs, such as the RSs of agent nodes, or first-hop RSs.

Transmission of the wireless topology relationship table can be implemented through the following methods: A. Add a configuration indication information unit in the existing downlink data indication message to indicate the position and size of the wireless network configuration information data such as the wireless network topology information and wireless link status information. B. Directly use a configuration indication message carrying configuration information such as the wireless network topology information and wireless link status information. The configuration information may be broadcasted to each node in the transmission group. Each node in the transmission group may also actively request to acquire the configuration information of the wireless network.

Since a RS of an agent node can also constructs the wireless network topology information structure of a wireless transmission sub-network, for the present invention, a RS may have the topology information of the whole wireless transmission network group, or the topology information of the wireless transmission sub-network, or no topology information at all.

When transmitting information, the management node may broadcast the wireless network topology information of the group in a broadcasting channel to facilitate RSs and MSs acquiring more information about the wireless transmission network. Nodes in the wireless transmission network group may ask the management node for the wireless link topology information and the management node provides the corresponding wireless link topology information according to the application.

Step 23, the management node and the RSs and/or MSs that have acquired the wireless network topology information optimize the connections in the wireless transmission network group, utilizing the wireless network topology information and a corresponding strategy.

One example is: a RS may control the access of a new RS based on the network topology information of the whole wireless transmission network group or that of the transmission sub-network subordinated to it, for example, when a RS at the second hop receives an access request from a new RS, it may reject the access.

Another example is, if a MS may acquire the network topology information from a broadcast message, it can determine the number of hops for the handover to a candidate RS based on the information, and if it is a third hop RS, the MS will not access to it even though its signal is the strongest, but select one from the RSs or BSs of the second hop or above whose signal is the strongest to perform the handover.

Similarly, the present invention is not limited to this specific case of management.

Obviously, the two management methods in the first scheme and the second scheme can be applied simultaneously, that is, step 22 and step 23 in the second scheme can also be performed in the first scheme.

### The third scheme

In this scheme, on the basis of the construction and update of the wireless network topology information, the link status information of wireless links is further detected, recorded and updated, and based on the wireless link status, wider and more effective management is carried out.

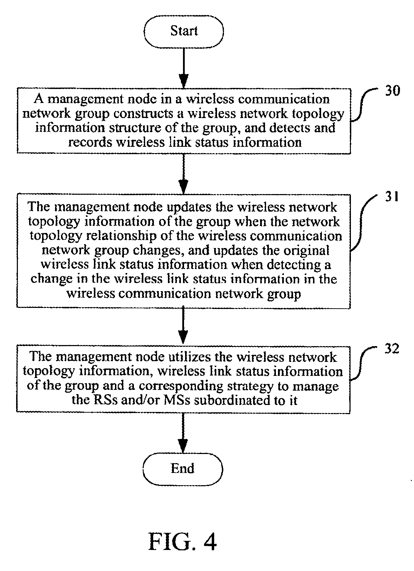

As shown in FIG. 4, the method of this scheme comprises the following steps:
Step 30, a management node in a wireless transmission network group constructs a wireless network topology information structure of the group, and detects and records wireless link status information;
The wireless link status information may comprise channel carrier to interference/noise ratio (CINR), wireless link package loss/error rate, delay of the processing and transmission in the wireless links, the actual throughput of each wireless link and the resources configured for the wireless links, and so on. One or any combination of these parameters may be adopted, and other parameters may also be adopted.

The wireless link status information can be obtained through the following two methods:
1) Obtain the information based on detection result of service signal, for a wireless link directly connecting to the management node (the base station generally), the management node can detect the relative parameters of the uplink link status, and requests the node at the other end to report the relative parameters of the downlink status (reporting method such as periodical reporting or event triggering reporting may be adopted); for the link status between other nodes, the node of the previous hop obtains the information with an identical method and reports it to the management node.
2) Obtain the information based on the detection result of test signal, the management node (generally the base station) designates one or more nodes in the topology to send one or a series of test signals, and meanwhile designates other nodes to cooperate for the test and return the test results to the node sending the signals or directly to the management node. The node sending the signals or the management node acquires the status information of the relative wireless links based on the detection result, and if the node sending the signals is not a management node, it should report the updated wireless link status information to the management node.

In this case, multiple detection methods may be utilized, for example, after the initial access of a new RS, the management node designates the RS to send test signals, and designates other RSs to cooperate for the detection and return the test results (such as strength of the RS test signals received, signal to noise ratio, and so on) to the base station, and the management node can acquire the status of the relative links through analysis, and judge whether the access node of the RS should be adjusted according to the topology relationship and the status of the wireless links.

An alternative is, when the network is comparatively idle, the management node chooses the base station and all the RSs accessed to by some other RSs to send above-mentioned test signals and designates the nodes at the other ends within the topology relationship to cooperate for the test and return the test results, and this can guarantee that status of each wireless link in the topology can be tested. The management node analyzes and updates the wireless link status information in the wireless transmission network group based on the test results, and adjusts the connection relationship of the wireless transmission network according to the current wireless network topology information and the new wireless link status information.

Step 31, the management node updates the wireless network topology information of the group when the network topology relationship of the wireless transmission network group changes, and updates the original wireless link status information when detecting a change in the wireless link status information in the wireless transmission network group;

The update of the network topology relationship may be independent of the update of the wireless link status information. The update of the wireless link status information can also be performed according to the two methods described above, that is, the update is performed after obtaining the wireless link status information based on detection result of the service signal or the update is performed after obtaining the wireless link status information based on detection result of the test signal.

Step 32, the management node manages the RSs and/or MSs subordinated to it, utilizing the wireless network topology information, wireless link status information of the group and a corresponding strategy.

In this scheme, with the obtained wireless link status information, the management node carries out a more rational and intelligent management, which will be described through the following examples:
After a detection, if the base station finds that a first-hop RS is too busy, it may designate the second-hop RS subordinated to the first-hop RS to hand over to another first-hop RS, which is an adaptive load balancing operation.

When a RS initially accesses to a first-hop RS, generally, it selects a RS with the strongest signal, then if the base station finds that the link status between the first-hop RS and the base station is too bad, for example, too crowded, the base station may let the RS to hand over to another RS whose signal might not be the strongest, but the quality of the link on the whole path is better.

When a RS needs a handover, the base station or a RS as an agent node may perform a weighted computation based on the status of the multiple wireless links on the path, according to the wireless network topology information and wireless link status information, to select a target node with the best quality of service (QoS) for the RS.

### The fourth scheme

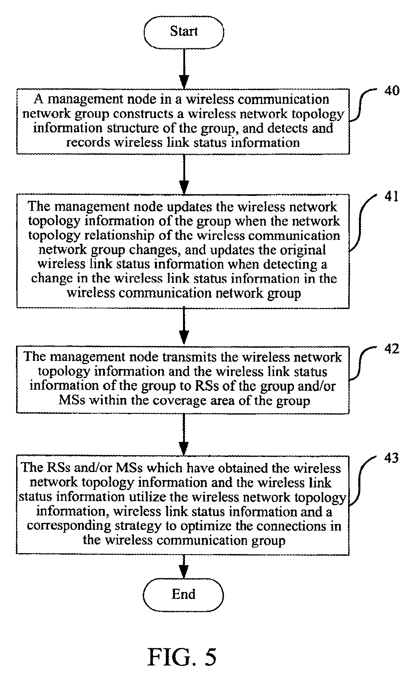

As shown in FIG. 5, the adaptive management method for a wireless transmission network in this scheme comprises the following steps:
Step 40, a management node in a wireless transmission network group constructs a wireless network topology information structure of the group, detects and records wireless link status information;
Step 41, the management node updates the wireless network topology information of this group when the network topology relationship of the wireless transmission network group changes, and updates the original wireless link status information when detecting a change in the wireless link status information in the wireless transmission network group;
The above two steps are the same as those in the third scheme.

Step 42, the management node transmits the wireless network topology information and the wireless link status information of the group to the RSs of the group and/or the MSs in the coverage of the group;

The management node may transmit the wireless network topology information and the wireless link status information of the group to all the RSs of the group or just part of the RSs, such as first-hop RSs or RSs accessed to by some other RSs. The management node may also broadcast the wireless network topology information and wireless link status information of the group in a broadcasting channel, and the MSs may receive the information before the access. In addition, nodes in the wireless transmission network group may ask the management node for the wireless link status information, and the management node provides the corresponding wireless link status information according to the application.

Step 43, the RSs and/or MSs which have obtained the wireless network topology information and the wireless link status information optimize the connections in the wireless transmission group, utilizing the wireless network topology information, wireless link status information and a corresponding strategy.

Here, in the control of the access of a new RS or MS, a RS may also take the relative wireless link status into consideration, besides the number of hops, thus may perform the control more rationally, and the third scheme may be referred to. So is the case in the update of the wireless links, the number of hops and the wireless link status may both be considered for the selection of a target node.

Obviously, the two management methods in the third scheme and the fourth scheme can be applied simultaneously, that is, step 42 and step 43 in the third scheme can also be performed in the fourth scheme.

In addition, in any one of the above schemes, management nodes of adjacent wireless transmission network groups may exchange the wireless network topology information and wireless links information of the respective wireless transmission network groups, and during a handover of a RS, when the RS detects a node in an adjacent cell, the base station can select a node which meets the requirement of QoS as the target node more accurately according to the topology information and the wireless link status information of the wireless transmission network group to which the node in the adjacent cell belongs.

The exchange between the management nodes may comprise the following situations:
1) A management node actively notifies an adjacent base station when there is an update in the topology relationship (wireless link status information may be included) of the wireless transmission network group.
2) A management node actively requests the management node in an adjacent cell to provide the wireless network topology information (wireless link status information may also be included) of the adjacent cell.

A management node may further transmit the wireless network topology information and wireless link status information of adjacent cells to all or part of the RSs in the group, so when these RSs detect a signal from the adjacent cells during a handover, they can also select a node which meets the requirement of QoS as the target node more accurately.

### Industrial Applicability

With the method of the present invention, in a wireless communication system, the advantages of the wireless relay station can be fully utilized to increase the coverage and throughput, moreover, through the construction and update of the topology relationship, the topology relationship and resource configuration of the wireless relay station and the base station can be intelligently adjusted, thus the service quality and resource utilization rate of the wireless transmission network can be effectively improved.

## Claims

1. An adaptive management method for a wireless transmission network comprising a base station and wireless relay stations, the method being applied in a wireless transmission network group comprising a base station and wireless relay stations subordinated to the base station, and the method comprising the following steps of:
(a) a management node in the wireless transmission network group constructing a wireless network topology information structure of the group (11, 20);
(b) the management node updating the wireless network topology information of the group when a network topology relationship of the wireless transmission network group changes (12, 21);
(c) the management node utilizing the wireless network topology information of the group and a corresponding strategy to manage wireless relay stations and mobile terminals subordinated to the management node (13);
**characterized in that** the method further comprises:
said management nodes of adjacent wireless transmission network groups exchanging the wireless network topology information or the wireless network topology information together with wireless link status information of the respective wireless transmission network groups, and during a handover of a wireless relay station, when the wireless relay station detects a node in an adjacent cell, the base station selecting a target node based on the wireless network topology information or the wireless network topology information together with the wireless link status information of the wireless transmission network group of the adjacent cell and a corresponding strategy.

2. A method of claim 1, wherein,
said management node is the base station.

3. A method of claim 1, further comprising,
taking, in the wireless transmission network group, a wireless relay station with other wireless relay stations subordinated thereto as an agent node,
composing a wireless transmission sub-network by the wireless relay station and the other wireless relay stations subordinated thereto, and
the agent node constructing a wireless network topology information structure of the wireless transmission sub-network, taking charges of updating the wireless network topology information when a network topology relationship of the wireless transmission sub-network changes, and reporting the wireless network topology information to the management node of the wireless transmission network group, and whereby the management node updating the wireless network topology information of the wireless transmission network group.

4. A method of claim 1 or claim 3, wherein,
said wireless network topology information structure comprises information of nodes at two ends of wireless links in the wireless network, and information of a connection relationship between any two nodes, and further comprises information of a number of hops if there is a connection.

5. A method of claim 4, further comprising:
during a handover of a wireless relay station, said management node judging the number of hops of a target wireless relay station to which the handover is requested according to the network topology relationship, and if the number of hops exceeds a preset threshold number of hops, the management node rejecting the request or selecting another target node for the wireless relay station.

6. A method of claim 1, further comprising:
the management node in said wireless transmission network group further detecting and recording wireless link status information of the wireless transmission network group (30, 40), and when detecting a change in the wireless link status information, updating original wireless link status information (31, 41), and utilizing the wireless network topology information of the group, the wireless link status information and a corresponding strategy to manage the wireless relay stations and/or mobile terminals subordinated to the management node (32).

7. A method of claim 6, wherein,
said wireless link status information comprises one or any combination of the following parameters: channel carrier to interference/noise ratio, packet loss/error rate in a wireless link, processing and transmission delay in a wireless link, actual throughput of a wireless link and resource configured for a wireless link.

8. A method of claim 6, wherein,
said wireless link status information is acquired based on a detection result of a service signal, for a wireless link directly connecting to the management node, the management node detects relative parameters of uplink status and requests the node at the other end to report relative parameters of downlink status; for status of links between other nodes, nodes of previous hop therein acquire the status with the same method and report the status to the management node.

9. A method of claim 6, wherein,
said wireless link status information is acquired based on a measurement result of a detection signal, the management node designates one or more nodes in the topology to send one or a series of test signals, and meanwhile designates other nodes to cooperate for the test and return test results to the node sending the signal or directly to the management node, the node sending the signal or the management node acquires status information of relative wireless links based on the detection result, and if the node sending the signal is not the management node, the node needs to report updated wireless link status information to the management node; and the management node adjusts connection relationships of the wireless transmission network according to current wireless network topology information and new wireless link status information.

10. A method of claim 6, further comprising:
said management node choosing the base station and all the wireless relay stations accessed to by some relay stations to send one or a series of test signals, and designating nodes at the other ends in the topology relationship to cooperate for the test and return test results,
the management node analyzing and updating the wireless link status information in the wireless transmission network group based on the test results, and adjusting connection relationships of the wireless transmission network according to current wireless network topology information and new wireless link status information.

11. A method of claim 1, further comprising:
said management node further transmitting the wireless network topology information of the group to wireless relay stations of the group and/or mobile terminals within the coverage of the group (22);
the wireless relay stations and/or mobile terminals which have obtained the wireless network topology information utilizing the wireless network topology information and a corresponding strategy to optimize connections in the wireless transmission group (23).

12. A method of claim 11, further comprising:
said management node transmitting the wireless network topology information of the group to all wireless relay stations in the group, or wireless relay stations accessed to by other wireless relay stations, or wireless relay stations before N^{th} hop; and/or
a wireless relay station requesting the wireless network topology information from the management node of the group, and the management node providing corresponding wireless network topology information according to the content of an application.

13. A method of claim 11, further comprising:
said management node broadcasting the wireless network topology information of the group, and the information being transmitted to wireless relay stations and/or mobile terminals within the coverage of the wireless transmission network group.

14. A method of claim 11, wherein,
when said management node transmits the wireless network topology information of the group to the wireless relays stations of the group, a configuration indication information unit is added in an existing downlink data indication message to indicate the position and size of the wireless network topology information and wireless link status information; or a configuration indication message is directly used to carry the wireless network topology information and the wireless link status information.

15. A method of claim 14, further comprising:
said management node transmitting the wireless network topology information or the wireless network topology information together with wireless link status information of adjacent cells to all or part of the wireless relay stations of the group, and when these wireless relay stations or mobile terminals within the coverage detect a signal from the adjacent cells during a handover, selecting a target node based on the above information and a corresponding strategy.

16. A method of claim 6 or claim 11, further comprising:
said management node further transmitting wireless link status information of the group to the wireless relay stations of the group and/or mobile terminals within the coverage of the group (42);
the wireless relay stations and/or mobile terminals which have obtained the wireless link status information utilizing the wireless network topology information, the wireless link status information and a corresponding strategy to optimize connections in the wireless transmission network group (43).

## Patentansprüche

1. Ein adaptives Verwaltungsverfahren für ein drahtloses Übertragungsnetz, beinhaltend eine Basisstation und drahtlose Relaisstationen, wobei das Verfahren in einer drahtlosen Übertragungsnetzgruppe angewendet wird, beinhaltend eine Basisstation und drahtlose Relaisstationen, welche der Basisstation untergeordnet sind, und wobei das Verfahren die folgenden Schritte beinhaltet:
(a) ein Verwaltungsknoten in der drahtlosen Übertragungsnetzgruppe konstruiert eine Struktur von Topologieinformationen für drahtlose Netze der Gruppe (11, 20);
(b) der Verwaltungsknoten aktualisiert die Topologieinformationen für drahtlose Netze der Gruppe, wenn sich eine Netz-Topologie-Beziehung der drahtlosen Übertragungsnetzgruppe ändert (12, 21);
(c) der Verwaltungsknoten nutzt die Topologieinformationen für drahtlose Netze der Gruppe und eine entsprechende Strategie zur Verwaltung von drahtlosen Relaisstationen und mobilen Endgeräten, die dem Verwaltungsknoten untergeordnet sind (13);
**dadurch gekennzeichnet, dass** das Verfahren weiterhin Folgendes beinhaltet:
die Verwaltungsknoten von benachbarten drahtlosen Übertragungsnetzgruppen tauschen die Topologieinformationen für drahtlose Netze oder die Topologieinformationen für drahtlose Netze zusammen mit Statusinformationen für drahtlose Verbindungen der jeweiligen drahtlosen Übertragungsnetzgruppen aus, und während einer Übergabe einer drahtlosen Relaisstation, wenn die drahtlose Relaisstation einen Knoten in einer benachbarten Zelle erfasst, wählt die Basisstation einen Zielknoten basierend auf den Topologieinformationen für drahtlose Netze oder den Topologieinformationen für drahtlose Netze zusammen mit den Statusinformationen für drahtlose Verbindungen der drahtlosen Übertragungsnetzgruppe der benachbarten Zelle und einer entsprechenden Strategie aus.

2. Verfahren gemäß Anspruch 1, wobei
der Verwaltungsknoten die Basisstation ist.

3. Verfahren gemäß Anspruch 1, weiterhin beinhaltend:
Übernehmen, in der drahtlosen Übertragungsnetzgruppe, einer drahtlosen Relaisstation mit anderen dieser untergeordneten drahtlosen Relaisstationen, als Agentenknoten,
Zusammenstellen eines drahtlosen Übertragungsteilnetzes durch die drahtlose Relaisstation und die anderen dieser untergeordneten drahtlosen Relaisstationen, und
Konstruieren, durch den Agentenknoten, einer Struktur von Topologieinformationen für drahtlose Netze des drahtlosen Übertragungsteilnetzes, wobei er die Aktualisierung der Topologieinformationen für drahtlose Netze übernimmt, wenn sich ein Netztopologieverhältnis der drahtlosen Übertragungsteilnetze ändert, und Melden der Topologieinformationen für drahtlose Netze gegenüber dem Verwaltungsknoten der drahtlosen Übertragungsnetzgruppe, und wobei der Verwaltungsknoten die Topologieinformationen für drahtlose Netze der drahtlosen Übertragungsnetzgruppe aktualisiert.

4. Verfahren gemäß Anspruch 1 oder Anspruch 3, wobei
die Struktur der Topologieinformationen für drahtlose Netze Informationen über Knoten an zwei Enden der drahtlosen Verbindungen in dem drahtlosen Netz beinhaltet und Informationen über eine Verbindungsbeziehung zwischen zwei beliebigen Knoten, und weiterhin Informationen über eine Anzahl von Hops, wenn eine Verbindung besteht, beinhaltet.

5. Verfahren gemäß Anspruch 4, weiterhin beinhaltend:
während einer Übergabe einer drahtlosen Relaisstation beurteilt der Verwaltungsknoten die Anzahl an Hops einer drahtlosen Zielrelaisstation, für die die Übergabe entsprechend der Netztopologiebeziehung angefordert wird, und wenn die Anzahl an Hops eine vorgegebene Schwellenwertzahl an Hops überschreitet, weist der Verwaltungsknoten die Anforderung zurück oder wählt einen anderen Zielknoten für die drahtlose Relaisstation aus.

6. Verfahren gemäß Anspruch 1, weiterhin beinhaltend:
der Verwaltungsknoten in der drahtlosen Übertragungsnetzgruppe erfasst und verzeichnet weiterhin Statusinformationen für drahtlose Verbindungen der drahtlosen Übertragungsnetzgruppe (30, 40), und wenn er eine Änderung in den Statusinformationen für drahtlose Verbindungen erfasst, aktualisiert er die ursprünglichen Statusinformationen für drahtlose Verbindungen (31, 41) und nutzt die Topologieinformationen für drahtlose Netze der Gruppe, die Statusinformationen für drahtlose Verbindungen und eine entsprechende Strategie zur Verwaltung der drahtlosen Relaisstationen und/oder mobilen Endgeräte, die dem Verwaltungsknoten untergeordnet sind (32).

7. Verfahren gemäß Anspruch 6, wobei
die Statusinformationen für drahtlose Verbindungen einen oder eine beliebige Kombination der folgenden Parameter beinhalten: Kanalträger zu Stör/Rausch-Verhältnis, Paketverlust/Fehlerrate in einer drahtlosen Verbindung, Verarbeitung und Übertragungsverzögerung in einer drahtlosen Verbindung, tatsächlicher Durchsatz einer drahtlosen Verbindung und für eine drahtlose Verbindung konfigurierte Ressource.

8. Verfahren gemäß Anspruch 6, wobei
die Statusinformationen für drahtlose Verbindungen basierend auf einem Erfassungsergebnis eines Dienstsignals erworben werden, damit sich eine drahtlose Verbindung direkt mit dem Verwaltungsknoten verbindet, wobei der Verwaltungsknoten relative Parameter des Uplink-Status erfasst und den Knoten am anderen Ende dazu auffordert, relative Parameter des Downlink-Status zu melden; für den Status von Verbindungen zwischen anderen Knoten erwerben Knoten des vorherigen Hops darin den Status mit dem gleichen Verfahren und melden dem Verwaltungsknoten den Status.

9. Verfahren gemäß Anspruch 6, wobei
die Statusinformationen für drahtlose Verbindungen basierend auf einem Messergebnis eines Erfassungssignals erworben werden, wobei der Verwaltungsknoten einen oder mehrere Knoten in der Topologie designiert, um ein oder eine Reihe von Testsignalen zu senden, und in der Zwischenzeit andere Knoten designiert, dass sie für den Test kooperieren und Testergebnisse an den Knoten, der das Signal sendet, oder direkt an den Verwaltungsknoten zurückschicken, wobei der Knoten, der das Signal sendet, oder der Verwaltungsknoten die Statusinformationen für relative drahtlose Verbindungen basierend auf dem Erfassungsergebnis erwirbt, und wenn der Knoten, der das Signal sendet, nicht der Verwaltungsmodus ist, muss der Knoten dem Verwaltungsknoten aktualisierte Statusinformationen für drahtlose Verbindungen melden; und der Verwaltungsknoten passt Verbindungsbeziehungen des drahtlosen Übertragungsnetzes gemäß den aktuellen Topologieinformationen für drahtlose Netze und neuen Statusinformationen für drahtlose Verbindungen an.

10. Verfahren gemäß Anspruch 6, weiterhin beinhaltend:
der Verwaltungsknoten wählt die Basisstation und alle drahtlosen Relaisstationen, auf die von manchen Relaisstationen zugegriffen wird, um ein oder eine Reihe von Testsignalen zu senden, aus und designiert Knoten an den anderen Enden in der Topologiebeziehung zur Kooperation für den Test und zur Zurücksendung der Testergebnisse,
der Verwaltungsknoten analysiert und aktualisiert die Statusinformationen für drahtlose Verbindungen in der drahtlosen Übertragungsnetzgruppe basierend auf den Testergebnissen und passt die Verbindungsbeziehungen des drahtlosen Übertragungsnetzes gemäß den aktuellen Topologieinformationen für drahtlose Netze und neuen Statusinformationen für drahtlose Verbindungen an.

11. Verfahren gemäß Anspruch 1, weiterhin beinhaltend:
der Verwaltungsknoten überträgt weiterhin die Topologieinformationen für drahtlose Netze der Gruppe auf drahtlose Relaisstationen der Gruppe und/oder mobile Endgeräte innerhalb der Reichweite der Gruppe (22);
die drahtlosen Relaisstationen und/oder mobilen Endgeräte, welche die Topologieinformationen für drahtlose Netze erhalten haben, nutzen die Topologieinformationen für drahtlose Netze und eine entsprechende Strategie zur Optimierung von Verbindungen in der drahtlosen Übertragungsgruppe (23).

12. Verfahren gemäß Anspruch 11, weiterhin beinhaltend:
der Verwaltungsknoten überträgt die Topologieinformationen für drahtlose Netze der Gruppe auf alle drahtlosen Relaisstationen in der Gruppe oder drahtlose Relaisstationen, auf welche von anderen drahtlosen Relaisstationen zugegriffen wird, oder drahtlose Relaisstationen vor dem Nten Hop; und/oder
eine drahtlose Relaisstation fordert die Topologieinformationen für drahtlose Netze vom Verwaltungsknoten der Gruppe an und der Verwaltungsknoten stellt entsprechende Topologieinformationen für drahtlose Netze gemäß dem Inhalt einer Anwendung bereit.

13. Verfahren gemäß Anspruch 11, weiterhin beinhaltend:
der Verwaltungsknoten funkt die Topologieinformationen für drahtlose Netze der Gruppe, und die Informationen werden auf die drahtlosen Relaisstationen und/oder mobilen Endgeräte innerhalb der Reichweite der drahtlosen Übertragungsnetzgruppe übertragen.

14. Verfahren gemäß Anspruch 11, wobei,
wenn der Verwaltungsknoten die Topologieinformationen für drahtlose Netze der Gruppe auf die drahtlosen Relaisstationen der Gruppe überträgt, wird eine Konfigurationsanzeige-Informationseinheit in einer bestehenden Downlink-Datenanzeigenachricht hinzugefügt, um die Position und die Größe der drahtlosen Netztopologieinformationen und der Statusinformationen für drahtlose Verbindungen anzuzeigen; oder es wird eine Konfigurationsanzeigenachricht direkt verwendet, um die Topologieinformationen für drahtlose Netze und die Statusinformationen für drahtlose Verbindungen zu tragen.

15. Verfahren gemäß Anspruch 14, weiterhin beinhaltend:
der Verwaltungsknoten überträgt die Topologieinformationen für drahtlose Netze oder die Topologieinformationen für drahtlose Netze zusammen mit den Statusinformationen für drahtlose Verbindungen von benachbarten Zellen auf alle oder einen Teil der drahtlosen Relaisstationen der Gruppe, und wenn diese drahtlosen Relaisstationen oder mobilen Endgeräte innerhalb der Reichweite während der Übergabe ein Signal von den benachbarten Zellen erfassen, wählen sie einen Zielknoten basierend auf den obigen Informationen und eine entsprechende Strategie aus.

16. Verfahren gemäß Anspruch 6 oder Anspruch 11, weiterhin beinhaltend:
der Verwaltungsknoten überträgt weiterhin die Statusinformationen für drahtlose Verbindungen der Gruppe auf die drahtlosen Relaisstationen der Gruppe und/oder mobilen Endgeräte innerhalb der Reichweite der Gruppe (42);
die drahtlosen Relaisstationen und/oder mobilen Endgeräte, welche die Statusinformationen für drahtlose Verbindungen erhalten haben, nutzen die Topologieinformationen für drahtlose Netze, die Statusinformationen für drahtlose Verbindungen und eine entsprechende Strategie, um die Verbindungen in der drahtlosen Übertragungsnetzgruppe zu optimieren (43).

## Revendications

1. Une méthode de gestion adaptative pour un réseau de transmission sans fil comprenant une station de base et des stations relais sans fil, la méthode étant appliquée dans un groupe de réseau de transmission sans fil comprenant une station de base et des stations relais sans fil subordonnées à la station de base, et la méthode comprenant les étapes suivantes consistant :
(a) en ce qu'un noeud de gestion dans le groupe de réseau de transmission sans fil construise une structure d'informations relatives à la topologie de réseau sans fil du groupe (11, 20) ;
(b) en ce que le noeud de gestion mette à jour les informations relatives à la topologie de réseau sans fil du groupe lorsqu'un lien de topologie de réseau du groupe de réseau de transmission sans fil change (12, 21) ;
(c) en ce que le noeud de gestion utilise les informations relatives à la topologie de réseau sans fil du groupe et une stratégie correspondante pour gérer des stations relais sans fil et des terminaux mobiles subordonnés au noeud de gestion (13) ;
**caractérisée en ce que** la méthode comprend en sus le fait :
que lesdits noeuds de gestion de groupes de réseau de transmission sans fil adjacents échangent les informations relatives à la topologie de réseau sans fil ou les informations relatives à la topologie de réseau sans fil conjointement avec des informations relatives au statut de liaisons sans fil des groupes de réseau de transmission sans fil respectifs, et durant un transfert d'une station relais sans fil, lorsque la station relais sans fil détecte un noeud dans une cellule adjacente, que la station de base sélectionne un noeud cible sur la base des informations relatives à la topologie de réseau sans fil ou des informations relatives à la topologie de réseau sans fil conjointement avec les informations relatives au statut de liaisons sans fil du groupe de réseau de transmission sans fil de la cellule adjacente et d'une stratégie correspondante.

2. Une méthode de la revendication 1, dans laquelle,
ledit noeud de gestion est la station de base.

3. Une méthode de la revendication 1, comprenant en sus,
le fait de prendre, dans le groupe de réseau de transmission sans fil, une station relais sans fil avec d'autres stations relais sans fil qui sont subordonnées à celle-ci comme noeud agent,
le fait de composer un sous-réseau de transmission sans fil grâce à la station relais sans fil et aux autres stations relais sans fil qui sont subordonnées à celle-ci, et
le fait que le noeud agent construise une structure d'informations relatives à la topologie de réseau sans fil du sous-réseau de transmission sans fil, se charge de mettre à jour les informations relatives à la topologie de réseau sans fil lorsqu'un lien de topologie de réseau du sous-réseau de transmission sans fil change, et rapporte les informations relatives à la topologie de réseau sans fil au noeud de gestion du groupe de réseau de transmission sans fil, et grâce à cela le fait que le noeud de gestion mette à jour les informations relatives à la topologie de réseau sans fil du groupe de réseau de transmission sans fil.

4. Une méthode de la revendication 1 ou de la revendication 3, dans laquelle,
ladite structure d'informations relatives à la topologie de réseau sans fil comprend des informations relatives à des noeuds à deux extrémités de liaisons sans fil dans le réseau sans fil, et des informations relatives à un lien de connexion entre deux noeuds quels qu'ils soient, et comprend en sus des informations relatives à un nombre de sauts si connexion il y a.

5. Une méthode de la revendication 4, comprenant en sus le fait :
que, durant un transfert d'une station relais sans fil, ledit noeud de gestion juge du nombre de sauts d'une station relais sans fil cible vers laquelle le transfert est demandé selon le lien de topologie de réseau, et si le nombre de sauts excède un nombre seuil prédéfini de sauts, que le noeud de gestion rejette la demande ou sélectionne un autre noeud cible pour la station relais sans fil.

6. Une méthode de la revendication 1, comprenant en sus le fait :
que le noeud de gestion dans ledit groupe de réseau de transmission sans fil détecte et enregistre en sus des informations relatives au statut de liaisons sans fil du groupe de réseau de transmission sans fil (30, 40), et lorsqu'il détecte un changement dans les informations relatives au statut de liaisons sans fil, qu'il mette à jour des informations relatives au statut de liaisons sans fil d'origine (31, 41), et qu'il utilise les informations relatives à la topologie de réseau sans fil du groupe, les informations relatives au statut de liaisons sans fil et une stratégie correspondante pour gérer les stations relais sans fil et/ou terminaux mobiles subordonnés au noeud de gestion (32).

7. Une méthode de la revendication 6, dans laquelle,
lesdites informations relatives au statut de liaisons sans fil comprennent l'un des paramètres suivants ou une combinaison quelle qu'elle soit de ceux-ci : rapport porteuse de canal à interférence/bruit, taux de perte/erreur de paquets dans une liaison sans fil, retard de traitement et de transmission dans une liaison sans fil, bande passante réelle d'une liaison sans fil et ressource configurée pour une liaison sans fil.

8. Une méthode de la revendication 6, dans laquelle,
lesdites informations relatives au statut de liaisons sans fil sont acquises sur la base d'un résultat de détection d'un signal de service, pour une liaison sans fil se connectant directement au noeud de gestion, le noeud de gestion détecte des paramètres relatifs de statut de liaison montante et demande au noeud à l'autre extrémité de rapporter des paramètres relatifs de statut de liaison descendante ; pour le statut de liaisons entre d'autres noeuds, des noeuds de saut précédent y acquièrent le statut avec la même méthode et rapportent le statut au noeud de gestion.

9. Une méthode de la revendication 6, dans laquelle,
lesdites informations relatives au statut de liaisons sans fil sont acquises sur la base d'un résultat de mesure d'un signal de détection, le noeud de gestion désigne un ou plusieurs noeuds dans la topologie pour envoyer un signal d'essai ou une série de signaux d'essai, et désigne pendant ce temps d'autres noeuds pour coopérer à l'essai et renvoyer des résultats d'essai au noeud qui envoie le signal ou directement au noeud de gestion, le noeud qui envoie le signal ou le noeud de gestion acquiert des informations relatives au statut de liaisons sans fil relatives sur la base du résultat de détection, et si le noeud qui envoie le signal n'est pas le noeud de gestion, le noeud doit rapporter des informations mises à jour relatives au statut de liaisons sans fil au noeud de gestion ; et le noeud de gestion ajuste des liens de connexion du réseau de transmission sans fil selon des informations courantes relatives à la topologie de réseau sans fil et de nouvelles informations relatives au statut de liaisons sans fil.

10. Une méthode de la revendication 6, comprenant en sus le fait :
que ledit noeud de gestion choisisse la station de base et toutes les stations relais sans fil auxquelles ont accès certaines stations relais pour envoyer un signal d'essai ou une série de signaux d'essai, et qu'il désigne des noeuds aux autres extrémités dans le lien de topologie pour coopérer au test et renvoyer des résultats d'essai,
que le noeud de gestion analyse et mette à jour les informations relatives au statut de liaisons sans fil dans le groupe de réseau de transmission sans fil sur la base des résultats d'essai, et ajuste les liens de connexion du réseau de transmission sans fil selon des informations courantes relatives à la topologie de réseau sans fil et de nouvelles informations relatives au statut de liaisons sans fil.

11. Une méthode de la revendication 1, comprenant en sus le fait :
que ledit noeud de gestion transmette en sus les informations relatives à la topologie de réseau sans fil du groupe à des stations relais sans fil du groupe et/ou terminaux mobiles dans la couverture du groupe (22) ;
que les stations relais sans fil et/ou terminaux mobiles qui ont obtenu les informations relatives à la topologie de réseau sans fil utilisent les informations relatives à la topologie de réseau sans fil et une stratégie correspondante afin d'optimiser des connexions dans le groupe de transmission sans fil (23).

12. Une méthode de la revendication 11, comprenant en sus le fait :
que ledit noeud de gestion transmette les informations relatives à la topologie de réseau sans fil du groupe à toutes les stations relais sans fil dans le groupe, ou stations relais sans fil auxquelles ont accès d'autres stations relais sans fil, ou station relais sans fil avant le N^{ième} saut ; et/ou
qu'une station relais sans fil demande les informations relatives à la topologie de réseau sans fil au noeud de gestion du groupe, et que le noeud de gestion fournisse des informations relatives à la topologie de réseau sans fil correspondantes selon le contenu d'une application.

13. Une méthode de la revendication 11, comprenant en sus le fait :
que ledit noeud de gestion diffuse les informations relatives à la topologie de réseau sans fil du groupe, et que les informations soient transmises à des stations relais sans fil et/ou terminaux mobiles dans la couverture du groupe de réseau de transmission sans fil.

14. Une méthode de la revendication 11, dans laquelle,
lorsque ledit noeud de gestion transmet les informations relatives à la topologie de réseau sans fil du groupe aux stations relais sans fil du groupe, une unité d'informations d'indication de configuration est ajoutée dans un message d'indication de données en liaison descendante existant pour indiquer la position et la taille des informations relatives à la topologie de réseau sans fil et informations relatives au statut de liaisons sans fil ; ou un message d'indication de configuration est directement utilisé pour véhiculer les informations relatives à la topologie de réseau sans fil et les informations relatives au statut de liaisons sans fil.

15. Une méthode de la revendication 14, comprenant en sus le fait :
que ledit noeud de gestion transmette les informations relatives à la topologie de réseau sans fil ou les informations relatives à la topologie de réseau sans fil conjointement avec des informations relatives au statut de liaisons sans fil de cellules adjacentes à toutes les stations relais sans fil du groupe ou à une partie d'entre elles, et lorsque ces stations relais sans fil ou terminaux mobiles dans la couverture détectent un signal provenant des cellules adjacentes durant un transfert, qu'il sélectionne un noeud cible sur la base des informations ci-dessus et d'une stratégie correspondante.

16. Une méthode de la revendication 6 ou de la revendication 11, comprenant en sus le fait :
que ledit noeud de gestion transmette en sus des informations relatives au statut de liaisons sans fil du groupe aux stations relais sans fil du groupe et/ou terminaux mobiles dans la couverture du groupe (42) ;
que les stations relais sans fil et/ou terminaux mobiles qui ont obtenu les informations relatives au statut de liaisons sans fil utilisent les informations relatives à la topologie de réseau sans fil, les informations relatives au statut de liaisons sans fil et une stratégie correspondante afin d'optimiser des connexions dans le groupe de réseau de transmission sans fil (43).
